Europäisches Patentamt

European Patent Office

Office européen des brevets

(11) Veröffentlichungsnummer: **0 320 712 B1**

(12) **EUROPÄISCHE PATENTSCHRIFT**

(45) Veröffentlichungstag der Patentschrift: **02.12.92**

(51) Int. Cl.5: **B27N 3/00**

(21) Anmeldenummer: **88120117.2**

(22) Anmeldetag: **02.12.88**

(54) Verfahren und Vorrichtung zur Herstellung von Holzwerkstoffplatten.

(30) Priorität: **16.12.87 DE 3742652**

(43) Veröffentlichungstag der Anmeldung:
**21.06.89 Patentblatt 89/25**

(45) Bekanntmachung des Hinweises auf die
Patenterteilung:
**02.12.92 Patentblatt 92/49**

(84) Benannte Vertragsstaaten:
**FR GB IT SE**

(56) Entgegenhaltungen:
**DE-A- 1 653 249**
**DE-A- 3 107 589**

**CANADIAN JOURNAL OF CHEMISTRY, Oktober 1974, Seiten 623-626, National Research Council, Ottawa, CA; J.T. GOODWIN, G.R. SOMERVILLE: "Microencapsulation by physical methods"**

**JAPANESE PATENTS GAZETTE, Woche 7325, Section CH, Klasse A, Nr. 73-35893U(25), Derwent Publications Ltd, London, GB; & JP-B-73 19 545 (FUJI COMMUNICATION APPARA) 14-06-1973**

(73) Patentinhaber: **Held, Kurt**
**Alte Strasse 1**
**W-7218 Trossingen 2(DE)**

(72) Erfinder: **Held, Kurt**
**Alte Strasse 1**
**W-7218 Trossingen 2(DE)**

## Beschreibung

Die Erfindung betrifft ein Verfahren zur Herstellung von Holzwerkstoffplatten gemäß dem Oberbegriff des vorstehenden Patentanspruchs 1 und eine Vorrichtung zur Durchführung dieses Verfahrens nach dem Oberbegriff des Patentanspruchs 25.

Solche Holzwerkstoffplatten, wie Span-, Faser-, OSB- oder MDF-Platten bestehen aus Holzspänen, Holzfasern, usw. die mit einem Bindemittel beleimt sind. Bei den Bindemitteln handelt es sich gewöhnlicherweise um Harnstoff-, Melamin- oder Phenol-Formaldehyd-Harze. Diese Holzwerkstoffteilchen werden anschließend zu einem Vlies gestreut, das in einer Presse zu einer kompakten Platte verdichtet wird. Zur Beschleunigung des Abbindevorgangs wird dem Bindemittel für die Holzwerkstoffteilchen ein Härter beigefügt. Eine weitere Beschleunigung des Abbindevorgangs erfolgt durch die Zuführung von Wärme in der Presse.

Zur Verkürzung der Preßzeit und Verringerung der Wärmezufuhr bei der Herstellung von Holzwerkstoffplatten ist aus der DE-OS 36 39 061.5 ein Verfahren bekannt geworden, bei dem die Holzwerkstoffteilchen mit einem härterfreien Bindemittel beleimt, anschließend zu einem Vlies gestreut und dann verpreßt werden. Während der Verdichtungsphase wird in der Presse ein saurer oder basischer Härter in gasförmiger Phase oder in binärer Phase mit einem gasförmigen Trägermittel über die Oberflächen des Vlieses oder direkt in das Innere des Vlieses zugeführt. Der gasförmige Härter muß daher während der Verdichtungsphase von den Oberflächen des Vlieses in Richtung auf die Mitte des Vlieses zu diffundieren oder vom Inneren des Vlieses in Richtung auf die Oberflächen durch das Vlies diffundieren. Damit ist während der Verdichtungsphase die Härterkonzentration im Vlies über dessen Dicke gesehen stark unterschiedlich, so daß die Preßzeit wieder soweit verlängert werden muß, bis überall im Vlies die gleiche Härterkonzentration erreicht ist. Die unterschiedliche Härterkonzentration kann zu einer ungleichmäßigen Aushärtung des Bindemittels führen, womit letztendlich die technologischen Eigenschaften der Holzwerkstoffplatte, wie Zugfestigkeit, Quellbeständigkeit usw., verschlechtert werden.

Es wurde nun gefunden, daß sich das in der DE-OS 36 39 061.5 beschriebene Verfahren verbessern läßt, so daß eine weitere Verkürzung der Preßzeit unter Verbesserung der technologischen Eigenschaften der Holzwerkstoffplatten erreichbar ist. Es ist daher Aufgabe der Erfindung, bei dem Verfahren nach der Offenlegungsschrift DE-OS 36 39 061.5 die Konstanz des Verhältnisses von Bindemittel zu Härter während der Verdichtungsphase zu gewährleisten.

Das zur Lösung dieser Aufgabe dienende Verfahren wird durch die im Kennzeichen des Patentanspruchs 1 beschriebene technische Lehre vermittelt und eine zur Durchführung dieses Verfahrens dienende Vorrichtung wird im Kennzeichen des Patentanspruchs 25 angegeben.

Die mit der Erfindung erzielbaren Vorteile bestehen insbesondere darin, daß das gasförmige Trägermittel sich während der Verdichtungsphase bereits im Vlies befindet und direkt vor Ort an den Holzwerkstoffteilchen freigesetzt wird. Damit entfällt die Vorrichtung zur Zuführung des gasförmigen Härters in der Presse. Das Konzentrationsverhältnis von Bindemittel zu Härter ist im Vlies während der gesamten Dauer der Verdichtungsphase konstant, da aufgrund der gleichmäßigen Verteilung des Härters keine Diffusion des Härters durch das Vlies stattfindet. Dadurch resultieren bessere technologische Eigenschaften der Holzwerkstoffplatte. Der gasförmige Härter, der im Vlies freigesetzt wird, reagiert mit dem Bindemittel und kann daher nicht aus dem Vlies entweichen. Da zudem keine Zuführvorrichtungen in der Presse für den gasförmigen Härter benötigt werden, können somit keine Anteile des gasförmigen Härters in die Umwelt entweichen. Aufwendige Absaugvorrichtungen an der Presse erübrigen sich daher. Auch Beschädigungen der Presse durch die in der Regel sehr aggressiven gasförmigen Härter, wie Chlorwasserstoffgas und dergleichen, werden daher mit Sicherheit vermieden.

Das erfindungsgemäße Verfahren wird anhand eines bevorzugten Ausführungsbeispieles für eine Vorrichtung zur Durchführung des Verfahrens, die in den Zeichnungen dargestellt ist, im folgenden näher beschrieben. Es zeigen:

Fig. 1   Eine Gesamtansicht einer Vorrichtung zur kontinuierlichen Herstellung von Holzwerkstoffplatten,

Fig. 2   einen Schnitt durch eine Doppelbandpresse zur Verpressung eines Vlieses aus Holzwerkstoffteilchen,

Fig. 3   eine Vorrichtung zur Streuung von Holzwerkstoffteilchen,

Fig. 4   eine Vorrichtung zur Streuung von Holzwerkstoffteilchen in einer weiteren Ausführungsform und

Fig. 5   einen Schnitt durch eine Vorrichtung zur Erzeugung der den Härter enthaltenden Mikrokapseln.

Das erfindungsgemäße Verfahren kann sowohl mit kontinuierlich arbeitenden Anlagen zur Herstellung von endlosen Holzwerkstoffplattenbahnen als auch mit diskontinuierlichen Anlagen zur Herstellung von Holzwerkstoffplatten mit Fixmaßen durchgeführt werden. Kontinuierliche Verfahren arbeiten in der Regel mit einer Doppelbandpresse, während diskontinuierliche Verfahren Ein- oder Mehretagenpressen verwenden.

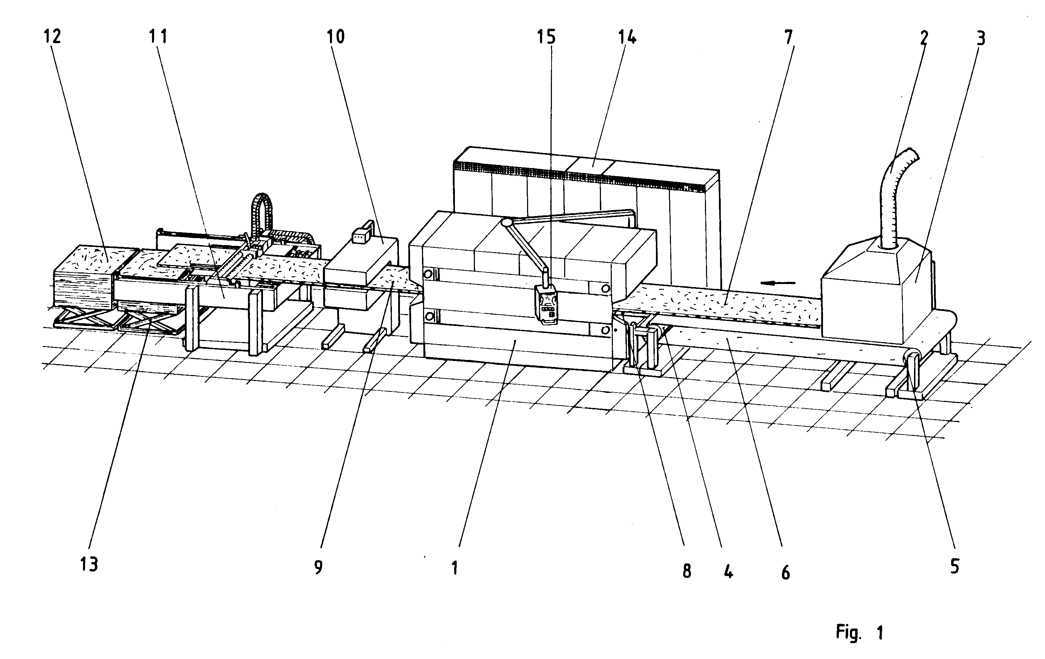

Eine solche kontinuierlich arbeitende Anlage zur Herstellung von Spanplatten ist in Fig. 1 gezeigt. Die Holzwerkstoffteilchen sind in diesem Fall Holzspäne, die in an sich bekannten, von der Doppelbandpresse 1 angeordneten Vorrichtungen aufbereitet, vorbehandelt und mit härterfreiem Bindemittel beleimt werden. Diese beleimten Holzspäne werden über eine Rohrleitung 2 einer Streustation 3 zugeführt. Die Streustation 3, die sich in unmittelbarer Nähe des Einlaufs in die Doppelbandpresse 1 befindet, ist über einem Förderband 6 angeordnet, das über zwei Umlenkwalzen 4 und 5 geschlungen ist und sich kontinuierlich in Pfeilrichtung auf die Doppelbandpresse 1 zu bewegt. In der Streustation 3 werden die beleimten Holzspäne zusammen mit Mikrokapseln auf das Förderband 6 zu einem aus einem Spänekuchen bestehenden Vlies 7 gestreut. Diese Mikrokapseln enthalten einen Härter in gasförmiger oder binärer Phase mit einem gasförmigen Trägermittel für das Bindemittel. Die Kapselwände der Mikrokapseln bestehen aus einem Material, das sich gegenüber dem Bindemittel nicht reaktiv verhält. Entsprechend dem erfindungsgemäßen Verfahren sind damit die Mikrokapseln bereits vor der Verdichtungsphase in das Vlies 7 eingebracht, wobei die Kapselwände eine vorzeitige Reaktion des Härters mit dem Bindemittel vor dem Beginn der Verdichtungsphase verhindern.

Das die Mikrokapseln enthaltende Vlies 7 wird mit dem Förderband 6 in Pfeilrichtung auf die Doppelbandpresse 1 zu transportiert. Zwischen der Streustation 3 und der Doppelbandpresse 1 können noch weitere an sich bekannte und in der Zeichnung daher nicht eingezeichnete Vorrichtungen wie Kontrollwaagen, Vorpreßeinrichtungen, usw. angeordnet sein. An dem in der Zeichnung links liegenden Ende des Förderbandes 6, direkt bei der Umlenkwalze 4, ist ein Übergabeblech 8 angeordnet, das das Vlies 7 vom Förderband 6 in die Einlaufzone der Doppelbandpresse 1 leitet. In der Doppelbandpresse 1 wird das Vlies 7 bis zur Enddicke der Spanplatte verdichtet und unter Druck und gegebenenfalls Wärmeeinwirkung zu einer Spanplattenbahn 9 unter gleichzeitigem Transport durch die Doppelbandpresse verpreßt.

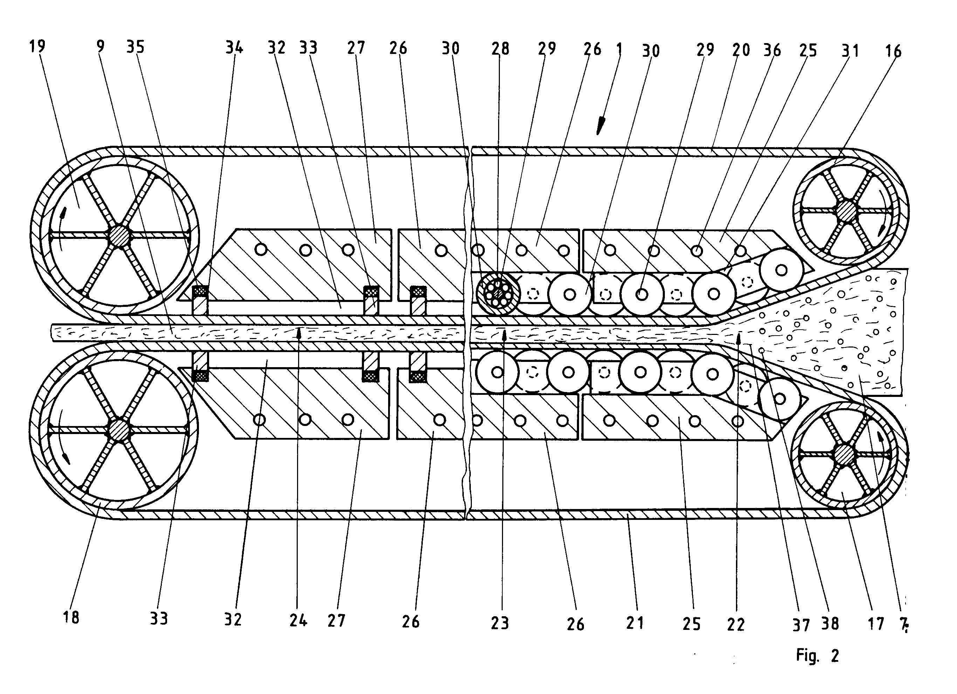

Eine solche zur Verpressung des Vlieses geeignete Doppelbandpresse wird in Fig. 2 im Schnitt näher gezeigt. Die Doppelbandpresse 1 besitzt vier drehbar gelagerte Umlenktrommeln 16, 17, 18, 19. Um jeweils zwei dieser Umlenktrommeln 16, 19 bzw. 17, 18 ist ein endloses Preßband 20 bzw. 21 geführt, dessen Umlaufrichtung durch Pfeile in den Umlenktrommeln 16 und 17 angegeben ist. Das Vlies 7 wird zwischen den beiden einander gegenüberliegenden Trums der Preßbänder 20, 21 durch die Doppelbandpresse 1 hindurchgeführt. Dabei wird das Vlies 7 zuerst in einer keilförmigen Einlaufzone 22 verdichtet, dann in einer Mitteldruckreaktionszone 23 mit konstanter Spaltbreite und anschließend in einer Niederdruckformhaltezone 24 verpreßt, so daß schließlich die Spanplattenbahn 9 an den Umlenktrommeln 18 und 19 die Doppelbandpresse 1 verläßt.

Der Preßdruck auf das Vlies 7 wird von im Pressengestell der Doppelbandpresse 1 angeordneten Druckplatten ausgeübt. Die dem Einlauf in die Doppelbandpresse zugeordnete Druckplatte 25 ist an einem Ende keilförmig ausgebildet und paßt sich so der Gestalt der keilförmigen Einlaufzone 22 an. Die Druckplatten 26 und 27 für die Mitteldruckreaktionszone 23 und Niederdruckformhaltezone 24 besitzen einen im wesentlichen rechteckigen Querschnitt. Zwischen der Druckplatte 25 und dem Preßband 20, 21 ist ein Rollenbett angeordnet, das den Preßdruck von der Druckplatte 25 auf das Preßband 20, 21 überträgt. Das in der Doppelbandpresse 1 ortsfest angeordnete Rollenbett besteht aus versetzt angeordneten, mittels Lagernadeln 28 auf Wellen 29 gelagerten Rollen 30. Die Wellen 29 sind in Lagerleisten 31 befestigt, die wiederum an ihrer dem Preßband 20, 21 abgewandten Seite in der Druckplatte 25 befestigt sind. Die weitere Ausbildung eines solchen Rollenbettes kann im übrigen nach der DE-OS 31 23 291 oder der DE-OS 33 04 854 erfolgen.

In der Mitteldruckreaktionszone 23 und Niederdruckformhaltezone 24 können ebenfalls zwischen den Druckplatten 26, 27 und den Preßbändern 20, 21 solche Rollenbetten angebracht sein. Alternativ kann hier jedoch auch eine Druckkammer 32 vorgesehen sein. Zu den Seiten ist diese Druckkammer 32 von einer Gleitflächendichtung 33 begrenzt, die als rahmenförmiges, in sich geschlossenes Gebilde ausgestaltet ist und rings um den Rand der Druckkammer 32 herum verläuft. Die Gleitflächendichtung 33 sitzt in einer Nut 34 der Druckplatte 26, 27 und wird vom Nutgrund der Nut 34 mit einem Druckmittel, das auf eine an der Gleitflächendichtung 33 anliegende O-Ringschnur 35 einwirkt, beaufschlagt, so daß die Gleitflächendichtung 33 mit einer Fläche fest gleitend auf dem Preßband 20, 21 aufliegt. In der Druckkammer 32 ist ein unter Druck setzbares fluides Druckmedium eingebracht, das den Preßdruck auf das Preßband 20, 21 ausübt.

Die vom Vlies 7 ausgeübten Reaktionskräfte werden über die Druckplatten 25, 26, 27 in das Pressengestell eingeleitet. Das Pressengestell, das beispielsweise aus der DE-OS 32 34 082 bekannt ist, ist aus Übersichtlichkeitsgründen in der Zeichnung nicht eingezeichnet. In den Druckplatten 25, 26, 27 befinden sich quer verlaufende Bohrungen 36, durch die ein erwärmtes Thermoöl geleitet werden kann, falls eine Erwärmung der Druckplatten gewünscht wird. Sollte eine Kühlung der Druckplatten gewünscht werden, was insbesondere bei der Druckplatte 27 der Niederdruckformhaltezone 24 nötig sein kann, so kann durch diese Bohrungen 36 auch ein Kühlmittel fliesen. Zur Übertragung der Wärme von der Druckplatte auf das Preßband oder zum Abführen von Wärme von Preßband auf die Druckplatte dienen die Rollen 30 des Rollenbettes oder in den Druckkammern 32 zusätzlich angeordnete wärmeleitende Elemente, die nach der DE-OS 33 25 578 ausgebildet sein können. Am Einlauf in die Doppelbandpresse können die Preßbänder 20, 21 auch an den einlaufseitigen Umlenktrommeln 16, 17 erwärmt werden, falls diese beheizbar ausgebildet sind. Die auf dem Preßband 20, 21 befindliche Wärme wird durch Wärmeleitung auf das zu verpressende Vlies 7 übertragen.

Das in Fig. 2 an der rechten Seite in die Doppelbandpresse einlaufende Vlies 7 besteht aus einer Mischung von härterfrei beleimten Holzspänen 37 und den Härter enthaltenden Mikrokapseln 38. In der keilförmigen Einlaufzone 22 der Doppelbandpresse 1 wird dieses Vlies 7 kontinuierlich bis auf die Enddicke der Spanplattenbahn 9 verdichtet. Während dieser Verdichtungsphase bauen sich die Kapselwände der Mikrokapseln 38 ab und setzen dabei den Härter in gasförmiger oder binärer Phase mit einem gasförmigen Trägermittel frei. Da die Mikrokapseln 38 im gesamten Vlies 7 vorhanden sind, befindet sich der Härter über die gesamte Dicke des Vlieses 7 gleichmäßig verteilt direkt bei den Holzspänen 37 und katalisiert damit sofort die Abbindereaktion des Harzes, mit dem die Holzspäne 37 beleimt sind. Da der gasförmige Härter nicht durch das Vlies diffundieren muß, ist dessen Konzentration im Vlies konstant, so daß die Aushärtereaktion gleichmäßiger und schneller verläuft. Zur weiteren Beschleunigung kann dem Vlies 7 noch Wärme über die Preßbänder zugeführt werden. Alternativ ist es auch möglich, die beleimten Holzspäne 37 vor der Streuung zum Vlies 7 bis auf Verfahrenstemperatur, in der Regel ca. 90-130°C, zu erwärmen, da eine drucklose Voraushärtung vor der Doppelbandpresse 1 aufgrund des fehlenden Härters im Bindemittel nicht befürchtet werden muß. Nach der Verdichtungsphase in der keilförmigen Einlaufzone 22 folgt in der Doppelbandpresse 1 dann die Mittel - und Niederdruckphase, in der das Vlies 7 unter Flächendruck zur Spanplattenbahn 9 aushärtet.

Die Spanplattenbahn 9 verläßt die Doppelbandpresse 1 hinter der Niederdruckformhaltezone 24 an den auslaufseitigen Umlenktrommeln 18 und 19 mit gleichförmiger Geschwindigkeit und wird in den hinter der Doppelbandpresse 1 folgenden Anlagenteilen weiter bearbeitet. Falls erforderlich, kann die Spanplattenbahn 9 hinter der Doppelbandpresse 1 eine Kühleinrichtung zur weiteren Abkühlung durchlaufen. Wie in Fig. 1 zu sehen ist, wird die Spanplattenbahn 9 dann in einer Schleifstation 10 auf das Fertigmaß geschliffen. Anschließend wird die Spanplattenbahn 9 in einer Querschneidestation 11 in einzelne Spanplatten 12 der gewünschten Größe unterteilt, die zum Abtransport auf Paletten in einer Stapeleinrichtung 13 gestapelt werden. Der gesamte Verfahrensablauf der in Fig. 1 gezeigten Anlage wird von einem Rechner, der im Schaltschrank 14 angeordnet ist, gesteuert. Der Benutzer kann die Parameter für die Rechnersteuerung über ein Datenterminal 15 eingeben.

Zur Verwirklichung des erfindungsgemäßen Verfahrens können außer der hier beschriebenen Doppelbandpresse auch vertikal aufgestellte Doppelbandpressen oder diskontinuierlich arbeitende Ein- oder Mehretagenpressen, wie sie in mehreren Ausführungsbeispielen in der Offenlegungsschrift DE-OS 36 39 061.5 beschrieben sind, verwendet werden. Man erhält bei Verwendung des erfindungsgemäßen Verfahrens als besonderen Vorteil gegenüber der genannten Offenlegungsschrift, daß die Zuführungen für den gasförmigen Härter in der Presse entfallen, wodurch der konstruktive Aufwand für die Presse vermindert wird.

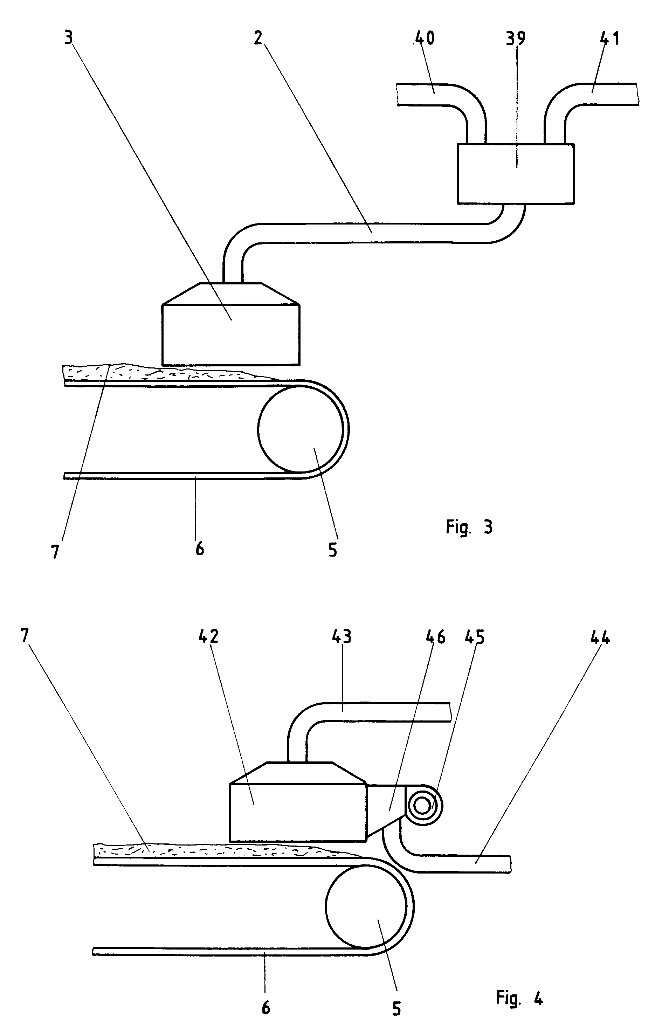

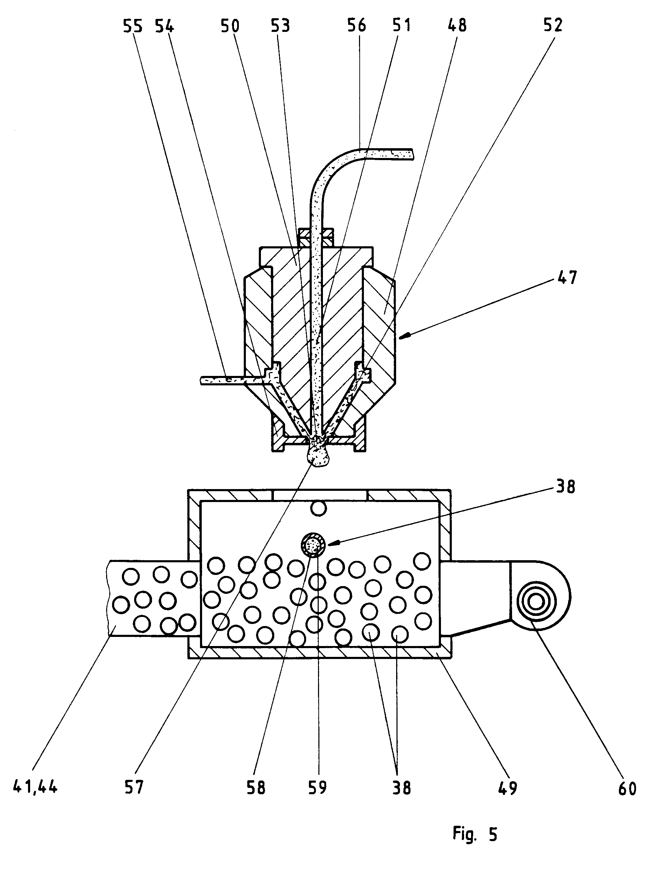

Am einfachsten werden die Mikrokapseln 38 in das Vlies 7 eingebracht, indem sie mit den härterfrei beleimten Holzspänen 37 gemischt und anschließend zu einem Vlies 7 gestreut werden oder indem sie bei der Streuung der Holzspäne 37 zu einem Vlies 7 mit den Holzspänen 37 vermischt werden. In Fig. 3 ist eine solche Vorrichtung zur Streuung der Holzspäne 37 gezeigt. Diese Vorrichtung besteht aus einer Streustation 3 und einer Mischstation 39, die durch eine Rohrleitung 2 miteinander verbunden sind. Zu der Mischvorrichtung 39 führt eine Zuleitung 40 von der Beleimungsvorrichtung für die Holzspäne 37 und eine Zuleitung 41 von der Erzeugungsvorrichtung 47 (siehe Fig. 5) für die Mikrokapseln 38. Die Holzspäne 37, die in der Beleimungsvorrichtung mit einem härterfreien Bindemittel versehen werden, werden über die Zuleitung 40 pneumatisch in die Mischstation 39 gefördert. Über die Zuleitung 41 werden die Mikrokapseln 38 von der Erzeugungsvorrichtung in die Mischstation 39 pneumatisch gefördert. In der Mischstation 39 werden die Holzspäne 37 und die Mikrokapseln 38 miteinander in dem gewünschten Verhältnis gleichmäßig gemischt. Diese Mischung aus Holzspänen 37 und Mikrokapseln 38 wird dann über die Rohrleitung 2 der Streustation 3 zugeführt, wo das Gemisch aus Holzspänen 37 und Mikrokapseln 38 zu einem Vlies 7 auf dem Förderband 6 gestreut wird. Die Streustation 3 kann als an sich bekannte Wurf- oder Windstreustation arbeiten.

In Fig. 4 ist eine weitere Vorrichtung zur Streuung der Holzspäne gezeigt. Die Streustation 42 besitzt eine Zuleitung 43 zur Beleimungsvorrichtung, in der die mit härterfreiem Bindemittel beleimten Holzspäne 37 pneumatisch in die Streustation 42 gefördert werden. Ein Ventilator 45 ist mittels eines Rohrstückes 46 seitlich an der Streustation 42 befestigt. In das Rohrstück 46 mündet eine Zuleitung 44 von der Erzeugungsvorrichtung 47 (siehe Fig. 5) für die Mikrokapseln 38. Die Mikrokapseln 38 werden über die Zuleitung 44 in das Rohrstück 46 gefördert, wo sie von dem Luftstrom, der von dem Ventilator 45 erzeugt wird, aufgenommen und in die Streustation 42 gefördert werden. In der Streustation 42 werden die beleimten Holzspäne 37, die über die Zuleitung 43 zugeführt werden, von dem Luftstrom erfaßt und entsprechend ihrer Größe an die entsprechende Stelle des Förderbandes 6 zusammen mit den im Luftstrom befindlichen Mikrokapseln 38 gestreut. Dadurch bildet sich auf dem Förderband 6 ein Vlies 7, in dem die Mikrokapseln 38 gleichmäßig zwischen den Holzspänen 37 verteilt sind. Bei dieser nach dem Windstreuverfahren arbeitenden Streustation 42 werden die Mikrokapseln 38 also in der Streustation 42 mit den Holzspänen 37 während der Streuung vermischt.

Eine Erzeugungsvorrichtung 47 für die Mikrokapseln 38 ist im Schnitt in Fig. 5 näher gezeigt. Diese Erzeugungsvorrichtung 47 besteht aus einem Auffangbehälter 49, über dem ein Düsenkopf 48 angeordnet ist. Der Düsenkopf 48 besitzt einen Einsatz 50, in dessen Mitte ein durchgehender Kanal 51 mit kreisförmigen Querschnitt verläuft. Der untere Teil des Einsatzes 50 läuft kegelförmig zu und besitzt einen gewissen Abstand zu der Wand des Düsenkopfes 48, so daß ein Ringraum 52 entsteht. Sowohl der Kanal 51 als auch der Ringraum 52 münden in einer gemeinsamen kreisförmigen Öffnung 53 im Düsenmundstück 54, das am unteren Teil des Düsenkopfes 48 aufgesetzt ist. Über eine seitliche Leitung 55, die durch die Wand des Düsenkopfes 48 hindurch auf den Ringraum 52 geht, wird flüssiges Wandmaterial für die Mikrokapseln 38 in den Ringraum 52 eingebracht. Das in der Zeichnung durch Wellenlinien dargestellte Wandmaterial fließt durch den Ringraum 52 und bildet an der Öffnung 53 des Düsenmundstückes 54 eine Membran. Der in der Zeichnung durch Punkte dargestellte Härter in gasförmiger Phase oder in binärer Phase mit einem gasförmigen Trägermittel wird über eine Leitung 56 in den Kanal 51 unter Druck eingeführt und bläht an der Öffnung 53 die Membran zu einem tropfenförmigen Gebilde 57 auf. Das die Mikrokapsel 38 darstellende tropfenförmige Gebilde 57 reißt schließlich vom Düsenmundstück 54 ab und besitzt nun eine geschlossene Kapselwand 58, die den eingeschlossenen gasförmigen Härter 59 umhüllt. Die Mikrokapsel 38, deren tropfenförmige Gestalt während des Falls aufgrund der Oberflächenspannung sich weitgehend einer Kugel annähert, fällt in den Auffangbehälter 49. An der Öffnung 53 des Düsenmundstükkes 54 bildet sich erneut eine Membran aus dem Wandmaterial und der Verkapselungsvorgang für den Härter beginnt von neuem. Die im Auffangbehälter 49 gesammelten Mikrokapseln 38 werden schließlich mittels eines Luftstromes, der von einem am Auffangbehälter 49 befestigten Gebläse 60 erzeugt wird, pneumatisch über die Leitung 41, 44 zur Mischstation 39 oder Streustation 42 gefördert.

Da das dem Düsenkopf 48 zugeführte Material für die Kapselwand 58 flüssig ist, muß dieses nach Bildung der Mikrokapsel gehärtet werden, um eine stabile Kapselwand 58 zu erzeugen, die den im Inneren der Mikrokapsel 38 enthaltenen Härter 59 nicht vorzeitig freigibt. Je nach Art des Wandmaterials kommen als Härtungsmechanismen chemische Reaktionen, Abkühlung und Extraktion oder Verdampfung von Lösungsmitteln, die im Wandmaterial enthalten sind, in Frage. Handelt es sich bei dem Material für die Kapselwand 58 beispielsweise um eine Schmelze, so kann im Auffangbehälter 49 eine Kühlflüssigkeit als Härtungsmedium vorhanden sein. Während des Falls vom Düsenmundstück 54 kühlt die Kapselwand 58 soweit ab, daß sie weitgehend stabilisert ist. Beim Eintritt in den Auffangbehälter 49 gelangt die Mikrokapsel 38 dann in die Kühlflüssigkeit und kühlt vollends ab, wobei die Kapselwand 58 vollkommen erstarrt und eine feste Hülle für den Härter 59 bildet.

Die Erzeugungsvorrichtung 47 für die Mikrokapseln 38 und die Mischstation 39, falls vorhanden, sollten nicht zu weit von der Streustation 3, 42 entfernt sein, um Beschädigungen der Kapselwände 58 an den Mikrokapseln 38 durch zu lange Transportwege auszuschließen. Weiterhin ist es vorteilhaft, wenn die Streustation 3, 42 möglichst unmittelbar vor der Presse angeordnet ist, so daß gewährleistet wird, daß die Kapselwände 58 der Mikrokapseln 38 im Vlies 7 sich auf dem Transport zum Einlauf in die Presse noch nicht auflösen, womit eine vorzeitige Reaktion des Bindemittels mit dem gasförmigen Härter vor der Presse mit Sicherheit vermieden wird.

Für die üblicherweise bei der Herstellung von Spanplatten verwendeten duroplastischen Bindemitteln, wie Harnstoff- oder Melamin-Formaldehyd-Harze, wirken starke anorganische oder organische Säuren als besonders schnelle Härter, die die Aushärtereaktion des Harzes stark beschleunigen. Solche Säuren sind beispielsweise Salzsäure, Schwefelsäure, Phosphorsäure, Ameisensäure, Essigsäure, Maleinsäure und dergleichen. Für die alternativ bei der Spanplattenherstellung verwendeten Phenol-Formaldehyd- oder Resorcinharze als Bindemittel wirken anorganische Basen als schnelle Härter, beispielsweise Ammoniak. Diese genannten Säuren oder Basen in gasförmiger Phase oder in binärer Phase mit einem gasförmigen Trägermittel werden daher bevorzugt als Inhalt für die Mikrokapseln 38 verwendet. Als besonders geeigneter Härter hat sich in Versuchen Chlorwasserstoffgas erwiesen.

Wie weiter oben beschrieben, werden während der Verdichtungsphase in der keilförmigen Einlaufzone 22 die Kapselwände 58 der Mikrokapseln 38 durch den Preßdruck, der durch die Verdichtung der Holzspäne 37 auf die Mikrokapseln 38 ausgeübt wird, zerstört, so daß der Inhalt der Mikrokapseln 38 freigesetzt wird. Als Alternative zu diesem mechanischen Abbau der Kapselwände 58 können die Kapselwände 58 auch aus einem Material bestehen, das thermisch abbaubar ist. Mittels der von den Preßbändern 20, 21 auf das Vlies 7 zugeführten Wärme werden dann die Kapselwände 58 der Mikrokapseln 38 während der Verdichtungsphase zerstört. Vorteilhafterweise wird man ein solches Material für die Kapselwände wählen, das bei der zur Verpressung des Vlieses gewählten Verfahrenstemperatur thermisch abbaubar ist. Diese Verfahrenstemperatur liegt in der Regel zwischen 70 und 110°C.

Es kann auch ein Material für die Kapselwände 58 gewählt werden, das sich nach einer vorherbestimmten Zeit von selbst auflöst. Ist die Einrichtung zur Herstellung der Mikrokapseln 38 in unmittelbarer Nähe der Doppelbandpresse 1 angebracht und erfolgt die Streuung der Holzspäne 37 zum Vlies 7 direkt vor der Doppelbandpresse 1, wobei die Mikrokapseln 38 bei der Streuung in das Vlies eingebracht werden, so kann bei den üblichen Vorschubgeschwindigkeiten der Preßbänder 20, 21 in der Doppelbandpresse 1 ein Material für die Kapselwände 58 gewählt werden, das sich nach ca. 15-30 Sekunden auflöst. Die genannten Verfahrensschritte zum Abbau der Kapselwände können auch miteinander kombiniert werden. Beispielsweise kann ein solches Material für die Kapselwände gewählt werden, daß durch gleichzeitige Einwirkung von Druck und Wärme während der Verdichtungsphase in der Presse abgebaut wird.

Zur einwandfreien Verkapselung des Härters sollte der Härter 59 in dem Material für die Kapselwände 58 nicht löslich sein. Um eine vorzeitige Freisetzung des Härters 59 aus den Mikrokapseln 38 zu vermeiden, sollte das Material für die Kapselwände 58 möglichst weder gegenüber dem Härter noch gegenüber dem Bindemittel reaktiv sein. Als geeignetes Material für die Kapselwände der Mikrokapseln haben sich Polymere erwiesen, insbesondere gut geeignet ist auch Paraffin, Wachs oder Gelatine. Es lassen sich jedoch auch andere Wandmaterialien einsetzen, beispielsweise Harze, Asphalt, Cellulose-Derivate oder Kunststoffe aus Harnstoff-Formaldehyd-Harz, Polystyrol, Polyäthylene, Polyepoxide und Polyurethane.

Um eine möglichst gleichmäßige, feine Verteilung der Mikrokapseln 38 im Vlies 7 zu erhalten ist es günstig, wenn der Durchmesser der Mikrokapseln ca. 500-1000 Mikrometer beträgt. Dabei sollte die Dichte des Materials für die Kapselwände ungefähr 0,8 bis 1,5 $g/cm^3$ betragen, insbesondere ist es günstig, wenn die Dichte bei ca. 1 $g/cm^3$ liegt.

Zur Erzeugung der den Härter enthaltenden Mikrokapseln 38 wurde als Ausführungsbeispiel ein mechanisch-physikalisches Verfahren beschrieben. Das erfindungsgemäße Verfahren soll jedoch nicht herauf beschränkt sein. Es kommen auch noch weitere physikalische Verfahren, die mit Zentrifugen, Wirbelbett oder im Vakuum arbeiten, in Frage. Aber auch chemische Verfahren, bei denen der gasförmige Härter in einer flüssigen Phase dispergiert und anschließend mikroverkapselt wird, lassen sich anwenden. Die Wandbildung für die Mikrokapseln erfolgt bei diesen chemischen Verfahren durch Polykondensation, Polyaddition, Koazervation oder Komplexkoazervation.

**Patentansprüche**

1. Verfahren zur Herstellung einer Holzwerkstoffplatte (9), insbesondere Span-, Faser-, OSB-, MDF-Platte u. dgl., bei dem die Holzwerkstoffteilchen (37) mit einem Bindemittel, wie Harnstoff-, Melamin- oder Phenol-Formaldehyd-Harze, beleimt sind, dessen Aushärtung mittels eines Härters (59) beschleunigt werden kann, die beleimten Holzwerkstoffteilchen zu einem Vlies (7) gestreut und dieses anschließend in einer Presse (1) unter Reduktion seiner Dicke verdichtet und danach unter einem Haltedruck verpreßt wird, wobei es sich bei dem Harz zur Beleimung der Holzwerkstoffteilchen um ein härterfreies Bindemittel handelt und ein saurer oder basischer Härter in gasförmiger Phase oder in binärer Phase mit einem gasförmigen Trägermittel während der Verdichtungsphase in der Presse (1) direkt in das Innere des Vlieses (7) zugeführt wird, **dadurch gekennzeichnet,** daß der Härter (59) in gasförmiger oder binärer Phase mit einem gasförmigen Trägermittel in Mikrokapseln (38) mit gegenüber dem Bindemittel nicht reaktiven Kapselwänden (58) enthalten ist, die vor Beginn der Verdichtungsphase durch Mischung mit den Holzwerkstoffteilchen in das Vlies (7) eingebracht werden, wobei die Mikrokapseln (38) mit den Holzwerkstoffteilchen (37) während der Streuung des Vlieses (7) vermischt werden oder bevor die Holzwerkstoffteilchen (37) zu einem Vlies (7) gestreut werden, und die Kapselwände (58) dieser Mikrokapseln (38) während der Verdichtungsphase in der Presse (1) abgebaut werden, wobei der gasförmige Härter (59) freigesetzt wird.

2. Verfahren nach Anspruch 1, **dadurch gekennzeichnet,** daß die Holzwerkstoffteilchen (37) mittels eines Luftstromes zu einem Vlies (7) gestreut werden und die Mikrokapseln (38) in diesem Luftstrom zu den Holzwerkstoffteilchen (37) transportiert werden.

3. Verfahren nach einem der Ansprüche 1 bis 2, **dadurch gekennzeichnet,** daß die Verdichtungsphase in der Presse (1) in kurzem zeitlichen Abstand nach Streuung des Vlieses (7) mit den darin eingebrachten Mikrokapseln (38) folgt.

4. Verfahren nach einem der Ansprüche 1 bis 3, **dadurch gekennzeichnet,** daß die Kapselwände (58) der Mikrokapseln (38) mechanisch abbaubar sind.

5. Verfahren nach Anspruch 4, **dadurch gekennzeichnet,** daß die Kapselwände (58) durch den Preßdruck in der Presse (1) während der Verdichtungsphase zerstört werden.

6. Verfahren nach einem der Ansprüche 1 bis 5, **dadurch gekennzeichnet,** daß die Kapselwände (58) der Mikrokapseln (38) thermisch abbaubar sind.

7. Verfahren nach Anspruch 6, **dadurch gekennzeichnet,** daß während der Verdichtungsphase in der Presse Wärme zugeführt wird, die die Kapselwände (58) der Mikrokapseln (38) zerstört.

8. Verfahren nach Anspruch 7, **dadurch gekennzeichnet,** daß der thermische Abbau der Kapselwände (58) bei ca. 70-110°C einsetzt.

9. Verfahren nach einem der Ansprüche 1 bis 8, **dadurch gekennzeichnet,** daß die Kapselwände (58) der Mikrokapseln (38) sich nach einer vorherbestimmten Zeit auflösen.

10. Verfahren nach Anspruch 9, **dadurch gekennzeichnet,** daß die Auflösung der Kapselwände (58) ca. 15-30 Sekunden nach Herstellung der Mikrokapseln (38) einsetzt.

11. Verfahren nach einem der Ansprüche 1 bis 10, **dadurch gekennzeichnet,** daß der Durchmesser der Mikrokapseln (38) ca. 500-1000 Mikrometer beträgt.

12. Verfahren nach einem der Ansprüche 1 bis 11, **dadurch gekennzeichnet,** daß die Dichte des Materials der Kapselwände (58) ca. 0,8 bis 1,5 g/cm$^3$ beträgt.

13. Verfahren nach einem der Ansprüche 1 bis 12, **dadurch gekennzeichnet,** daß die Kapselwände (58) aus einem Polymer hergestellt werden.

14. Verfahren nach Anspruch 13, **dadurch gekennzeichnet,** daß die Kapselwände (58) aus Paraffin, Wachs, Cellulose-Derivate oder Gelatine hergestellt werden.

15. Verfahren nach Anspruch 13, **dadurch gekennzeichnet,** daß die Kapselwände (58) aus Harnstoff-Formaldehyd-Harz, Polystyrol, Polyäthylen, Polyepoxiden oder Polyurethanen hergestellt werden.

16. Verfahren nach einem der Ansprüche 1 bis 15, **dadurch gekennzeichnet,** daß die Mikrokapseln (38) auf mechanisch-physikalische Art hergestellt werden.

17. Verfahren nach Anspruch 16, **dadurch gekennzeichnet,** daß die Mikrokapseln (38) mittels einer Düse (48, 50-54), einer Zentrifuge, einem Wirbelbett oder im Vakuum erzeugt werden.

18. Verfahren nach einem der Ansprüche 1 bis 15, **dadurch gekennzeichnet,** daß die Mikrokapseln (38) auf chemische Art erzeugt werden.

19. Verfahren nach Anspruch 18, **dadurch gekennzeichnet,** daß der gasförmige Härter (59) in einer flüssigen Phase dispergiert wird und anschließend die Wandbildung für die Mikrokapseln (38) zur Einschließung des Härters (59) durch Polykondensation, Polyaddition, Koazervation oder Komplexkoazervation erfolgt.

20. Verfahren nach einem der Ansprüche 16 bis 19, **dadurch gekennzeichnet,** daß die Kapselwände (58) nach deren Herstellung durch Abkühlung, chemische Reaktionen oder Extraktion bzw. Verdampfung von Lösungsmitteln gehärtet werden.

21. Verfahren nach einem der Ansprüche 1 bis 20, **dadurch gekennzeichnet,** daß die mit einem Bindemittel beleimten Holzwerkstoffteilchen (37) vor der Streuung vorgewärmt werden.

22. Verfahren nach Anspruch 21, **dadurch gekennzeichnet,** daß die Holzwerkstoffteilchen (37) auf die in der Presse (1) während der Verdichtungsphase benötigte Verfahrenstemperatur vorgewärmt werden.

23. Verfahren nach Anspruch 22, **dadurch gekennzeichnet,** daß die Vorwärmung der Holzwerkstoffteilchen (37) auf ca. 90-130°C erfolgt.

24. Verfahren nach einem der Ansprüche 1 bis 23, **dadurch gekennzeichnet,** daß die Mikrokapseln (38) Chlorwasserstoffgas als Härter (59) enthalten.

25. Vorrichtung zur Durchführung des Verfahrens nach einem der Ansprüche 1 bis 24 mit einer Beleimstation zur Beleimung der Holzwerkstoffteilchen (37) mit einem härterfreien Bindemittel, einer Streustation (3; 42) zur Streuung der Holzwerkstoffteilchen (37) zu einem Vlies (7), einer Presse zur Verdichtung und Verpressung des Vlieses (7) zu einer Holzwerkstoffplatte (9) und einer zwischen der Streustation (3, 42), welche sich in unmittelbarer Nähe des Einlaufs in die Presse (1) befindet, und der Presse (1) angeordneten Übergabeeinrichtung (8) zur Einführung des Vlieses (7) in die Presse (1), **dadurch gekennzeichnet,** daß in der Nähe der Presse (1) eine Erzeugungseinrichtung (47) zur Herstellung der den Härter in gasförmiger Phase oder binärer Phase mit einem gasförmigen Trägermittel enthaltenden Mikrokapseln (38) angeordnet ist und diese Einrichtung (47) zur Erzeugung der Mikrokapseln (38) auf kurzem Wege mit einer separaten, unmittelbar vor der Streustation (3) angeordneten oder in der Streustation (42) befindlichen Mischstation (39) verbunden ist, in der die Mikrokapseln (38) mit den beleimten Holzwerkstoffteilchen (37) vermischt werden, um eine vorzeitige Zerstörung der Mikrokapseln (38) zu vermeiden.

26. Vorrichtung nach Anspruch 25, **dadurch gekennzeichnet,** daß die Streustation (42) mittels Windstreuung arbeitet.

27. Vorrichtung nach Anspruch 25, **dadurch gekennzeichnet,** daß die Streustation (3) mittels Wurfstreuung arbeitet.

28. Vorrichtung nach einem der Ansprüche 25 bis 27, **dadurch gekennzeichnet,** daß es sich bei der Presse (1) um eine kontinuierlich arbeitende Doppelbandpresse (1) handelt.

29. Vorrichtung nach einem der Ansprüche 25 bis 27, **dadurch gekennzeichnet,** daß es sich bei der Presse (1) um eine diskontinuierlich arbeitende Ein- oder Mehretagenpresse handelt.

30. Vorrichtung nach einem der Ansprüche 25 bis 29, **dadurch gekennzeichnet,** daß die Erzeugungsvorrichtung (47) für die Mikrokapseln (38) aus einen Auffangbehälter (49) für die Mikrokapseln (38) besteht, über den ein Düsenkopf (48) angeordnet ist, der Düsenkopf (48) einen Einsatz (50) mit einem durchgehenden Kanal (51) besitzt, wobei im unteren Teil des Düsenkopfes (48) zwischen der Wand des Düsenkopfes (48) und dem Einsatz (50) ein Ringraum (52) vorhanden ist, dieser Ringraum (52) und der Kanal (51) in einer gemeinsamen Öffnung (53) am Düsenmundstück (54) münden und eine Zuleitung (55) für flüssiges Wandmaterial für die Kapselwände (58) durch den Düsenkopf (48) in den Ringraum (52) und eine Zuleitung (56) für den Härter (59) in den Kanal (51) vorhanden sind, so daß sich an der Öffnung (53) des Düsenmundstückes (54) die Mikrokapseln (38) als tropfenförmige Gebilde (57) bilden.

31. Vorrichtung nach Anspruch 30, **dadurch gekennzeichnet,** daß der Auffangbehälter (49) ein Härtemedium für die Kapselwände (58) der Mikrokapseln (38) enthält.

32. Vorrichtung nach Anspruch 30 oder 31, **dadurch gekennzeichnet,** daß am Auffangbehälter (49) ein Gebläse (60) angebracht ist, das einen Luftstrom erzeugt, der die Mikrokapseln (38) aus dem Auffangbehälter (49) über eine Zuleitung (41, 44) zu der Mischstation (39) bzw. Streustation (42) pneumatisch fördert.

## Claims

1. Method for the production of a wood material plate (9), in particular chipboard, fibreboard, OSB-board, MDF-board and the like, in which the wood material particles (37) are glue-coated by a binding agent, such as urea resin, melamine resin or phenolformaldehyde resin, the curing of which can be accelerated by means of a hardener (59), the glue-coated wood material particles are scattered into a fleece (7) and this is subsequently compacted with reduction of its thickness in a press (1) and thereafter extruded under a maintaining pressure, wherein a binding agent free of hardener is concerned in the case of the resin for the glue-coating of the wood material particles and an add or basic hardener in gaseous phase or in binary phase is fed directly into the interior of the fleece (7) with a gaseous carrier medium during the compaction phase in the press (1), characterised thereby, that the hardener (59) in gaseous or binary phase with a gaseous carrier medium is contained in microcapsules (38) with capsule walls (58), which are not reactive to the binding agent and introduced into the fleece (7) by mixture with the wood material particles before the beginning of the compaction phase, wherein the microcapsules (38) are intermixed with the wood material particles (37) during the scattering of the fleece (7) or before the wood material particles (37) are scattered into a fleece (37) and the capsule walls (58) are disintegrated during the compaction phase in the press (1), during which the gaseous hardener (59) is released.

2. Method according to claim 1, characterised thereby, that the wood material particles (37) are scattered into a fleece (7) by means of an air current and the microcapsules (38) are transported in this air current to the wood material particles (37).

3. Method according to one of the claims 1 and 2, characterised thereby, that the compaction phase in the press (1) follows with a brief time interval on the scattering of the fleece (7) with the microcapsules (38) introduced into it.

4. Method according to one of the claims 1 to 3, characterised thereby, that the capsule walls (58) of the microcapsules (38) are disintegratable mechanically.

5. Method according to claim 4, characterised thereby, that the capsule walls (58) are destroyed by the pressing pressure in the press (1) during the compaction phase.

6. Method according to one of the claims 1 to 5, characterised thereby, that the capsule walls (58) of the microcapsules (38) are disintegratable thermally.

7. Method according to claim 6, characterised thereby, that heat, which destroys the capsule walls (58) of the microcapsules (38), is supplied during the compaction phase in the press.

8. Method according to claim 7, characterised thereby, that the thermal disintegration of the capsule walls (58) sets in at about 70 to 110°C.

9. Method according to one of the claims 1 to 8, characterised thereby, that the capsule walls (58) of the microcapsules (38) dissolve after a predetermined time.

10. Method according to claim 9, characterised thereby, that the dissolution of the capsule walls (58) sets in about 15 to 30 seconds after the production of the microcapsules (38).

11. Method according to one of the claims 1 to 10, characterised thereby, that the diameter of the microcapsules (38) amounts to about 500 to 1000 micrometres.

12. Method according to one of the claims 1 to 11, characterised thereby, that the density of the material of the capsule walls (58) amounts to about 0.8 to 1.5 grams per cubic centimetre.

13. Method according to one of the claims 1 to 12, characterised thereby, that the capsule walls (58) are made of a polymer.

14. Method according to claim 13, characterised thereby, that the capsule walls (58) are made of paraffin, wax, cellulose derivatives or gelatine.

15. Method according to claim 13, characterised thereby, that the capsule walls (58) are made of urea formaldehyde resin, polystyrol, polyettylene, polyepoxides or polyurethanes.

16. Method according to one of the claims 1 to 15, characterised thereby, that the microcapsules (38) are produced in mechanically physical manner.

17. Method according to claim 16, characterised thereby, that the microcapsules (38) are produced by means of a nozzle (41, 50 to 54), a centrifuge, a fluidised bed or in vacuum.

18. Method according to one of the claims 1 to 15, characterised thereby, that the microcapsules (38) are produced in chemical manner.

19. Method according to claim 18, characterised thereby, that the gaseous hardener (59) is dispersed in a liquid phase and the formation of the walls for the microcapsules (38) for the inclusion of the hardener (59) takes place subsequently through polycondensation, polyaddition, coarcervation or complex coarcervation.

20. Method according to one of the claims 16 to 19, characterised thereby, that the capsule walls (58) are hardened after their production through cooling, chemical reactions or either extraction or evaporation of solvents.

21. Method according to one of the claims 1 to 20, characterised thereby, that the wood material particles (37), which have been glue-coated by a binding agent, are preheated before the scattering.

22. Method according to claim 21, characterised thereby, that the wood material particles (37) are preheated to the process temperature needed during the compaction phase in the press (1).

23. Method according to claim 22, characterised thereby, that the preheating of the wood material particles (37) takes place to about 90 to 130°C.

24. Method according to one of the claims 1 to 23, characterised thereby, that the microcapsules (38) contain hydrochloric acid gas as hardener (59).

25. Device for the performance of the method according to one of the claims 1 to 24 with a glue-coating station for the glue-coating of the wood material particles (37) with a binding agent free of hardener, a scattering station (3, 42) for the scattering of the wood material particles (37) into a fleece (7), a press for the compaction and extrusion of the fleece (7) into a wood material plate (9) and a transfer equipment (8), which is arranged between the scattering station (3, 42), which is disposed in the immediate proximity of the inlet into the press (1), and the press (1) for the introduction of the fleece (7) into the press (1), characterised thereby, that a production equipment (47) for the production of the microcapsules (38), which contain the hardener in gaseous or binary phase with a gaseous carrier medium, is arranged in the proximity of the press (1) and this equipment (47) for the production of the microcapsules (38) is connected over a short path with a separate mixing station (39), which is arranged directly upstream of the scattering station (3) or disposed in the scattering station (42) and in which the microcapsules (38) are intermixed with the glue-coated wood material particles (37) in order to avoid a premature destruction of the microcapsules (38).

26. Device according to claim 25, characterised thereby, that the scattering station (42) operates by means of wind scattering.

27. Device according to claim 25, characterised thereby, that the scattering station (3) operates by means of projection scattering.

28. Device according to one of the claims 25 to 27, characterised thereby, that a continuously operating double-belt press (1) is concerned in the case of the press (1).

29. Device according to one of the claims 25 to 27, characterised thereby, that a discontinuously operating single-tier or multitier press is concerned in the case of the press (1).

30. Device according to one of the claims 25 to 29, characterised thereby, that the production equipment (47) for the production of the microcapsules (38) consists of a collecting container (49), above which a nozzle head (48) is arranged, for the microcapsules (38), the nozzle head (48) comprises an insert (50) with a penetrating channel (51), wherein an annular space (52) is present between the wall of the nozzle head (48) and the insert (50) in the lower part of the nozzle head (48), this annular space (52) and the channel (51) open into a common opening (53) at the nozzle mouthpiece (54) and a feed duct (55) for liquid wall material for the capsule walls (58) through the nozzle head (48) into the annular space (52) and a feed duct (56) for the hardener (59) into the channel (51) are present so that the microcapsules (38) form as drop-shape formations (57) at the opening (53) of the nozzle mouthpiece (54).

31. Device according to claim 30, characterised thereby, that the collecting container (49) contains a hardening medium for the capsule walls (58) of the microcapsules (38).

32. Device according to claim 30 or 31, characterised thereby, that a blower (60) is arranged at the collecting container (49) and generates an air current which conveys the microcapsules (38) pneumatically out of the collecting container (49) by way of a feed duct (41, 44) to either the mixing station (39) or the scattering station (42).

**Revendications**

1. Procédé de fabrication d'un panneau lignocellulosique (9), en particulier un panneau de copeaux, de fibres, un panneau OSB, un panneau MDF ou analogue dans lequel des particules lignocellulosiques (37) sont encollées au moyen d'un liant, tel qu'une résine d'urée, de mélamine, de phénolformaldéhyde, dont le durcissement peut être accéléré par un durcisseur (59), les particules lignocellulosiques encollées étant distribuées de manière à former une nappe (7) qui est alors compactée dans une presse (1) avec réduction de son épaisseur, puis soumise à une pression de maintien, la résine utilisée pour encoller les particules étant dépourvue de durcisseur, lequel est un produit, acide ou basique en phase gazeuse ou en phase binaire comportant un vecteur sous forme gazeuse, qui est introduit directement à l'intérieur de la nappe (7) sur la presse pendant la phase de compactage, procédé caractérisé en ce que le durcisseur (59) sous forme gazeuse ou en phase binaire comportant un vecteur sous forme gazeuse est contenu à l'intérieur de microcapsules (38) dont l'enveloppe n'est pas réactive vis-à-vis du liant, les microcapsules (38) étant introduites et mélangées avec les particules (37) dans la nappe (7) avant compactage, ce mélange s'effectuant pendant la formation de la nappe (7) ou, avant sa formation, l'enveloppe des microcapsules (38) étant détruite pendant la phase de compactage dans la presse (1), libérant ainsi le durcisseur (59) sous forme gazeuse.

2. Procédé selon la revendication 1, caractérisé en ce que les particules lignocellulosiques (37) sont distribuées en nappe (7) par un courant d'air qui sert de moyen de transport amenant les microcapsules (38) jusqu'aux particules de bois (37).

3. Procédé selon l'une des revendications 1 et 2, caractérisé en ce que la phase de compactage dans la presse (1) suit à un bref intervalle de temps la formation de la nappe (7) avec ses microcapsules (38) incorporées.

4. Procédé selon l'une des revendications 1 à 3, caractérisé en ce que les enveloppes (58) des microcapsules (38) peuvent être détruites par action mécanique.

5. Procédé selon la revendication 4, caractérisé en ce que les enveloppes (58) des microcapsules sont détruites par la pression subie dans la presse (1) pendant le compactage.

6. Procédé selon l'une des revendications 1 à 5, caractérisé en ce que les enveloppes (58) des microcapsules (38) peuvent être décomposées par voie thermique.

7. Procédé selon la revendication 6, caractérisé en ce que pendant la phase de compactage dans la presse, il est fait un apport de chaleur qui détruit les enveloppes (58) des microcapsules (38).

8. Procédé selon la revendication 7, caractérisé en ce que la température de décomposition thermique des enveloppes (58) des microcapsules est d'environ 70 à 110 ° C.

9. Procédé selon l'une des revendications 1 à 8, caractérisé en ce que les enveloppes (58) des microcapsules (38) se décomposent au bout d'un temps prédéterminé.

10. Procédé selon la revendication 9, caractérisé en ce que la décomposition des enveloppes (58) des microcapsules se produit 15 à 30 secondes environ après la fabrication des microcapsules (38).

11. Procédé selon l'une des revendications 1 à 10, caractérisé en ce que le diamètre des microcapsules (38) est de 500 à 1000 microns environ.

12. Procédé selon l'une des revendications 1 à 11, caractérisé en ce que la densité du matériau constitutif de l'enveloppe (58) des microcapsules est d'environ 0,8 à 1,5 g/cm$^3$.

13. Procédé selon l'une des revendications 1 à 12, caractérisé en ce que les enveloppes (58) des microcapsules sont fabriquées à partir d'un polymère.

14. Procédé selon la revendication 13, caractérisé en ce que les enveloppes (58) des microcapsules sont fabriquées à partir de paraffine, de cire, d'un dérivé de la cellulose ou de gélatine.

15. Procédé selon la revendication 13, caractérisé en ce que les enveloppes (58) des microcapsules sont fabriquées à partir d'une résine d'urée-formaldéhyde, de polystyrol, de polyéthylène, de polyépoxyde ou de polyuréthanne.

16. Procédé selon l'une des revendications 1 à 15, caractérisé en ce que les microcapsules (38) sont fabriquées par un procédé mécano-physique.

17. Procédé selon la revendication 16, caractérisé en ce que les microcapsules (38) sont obtenues au moyen d'une buse d'extrusion (41, 50, 54), d'une centrifugeuse, d'un lit tourbillonnaire ou produites dans le vide.

18. Procédé selon l'une des revendications 1 à 15, caractérisé en ce que les microcapsules (38) sont obtenues par voie chimique.

19. Procédé selon la revendication 18, caractérisé en ce que le durcisseur gazeux (59) est dispersé dans une phase liquide et qu'aussitôt après, la formation de l'enveloppe des microcapsules (38) enfermant le durcisseur (59) est obtenue par polycondensation, polyaddition, conservation simple ou complexe.

20. Procédé selon l'une des revendications 16 à 19, caractérisé en ce que l'enveloppe (58) des microcapsules, après sa fabrication, est durcie par refroidissement, réactions chimiques, extraction ou évaporation de solvants.

21. Procédé selon l'une des revendications 1 à 20, caractérisé en ce que les particules lignocellulosiques (37) encollées par un liant sont préchauffées avant leur distribution.

22. Procédé selon la revendication 21, caractérisé en ce que les particules lignocellulosiques (37) sont préchauffées à la température nécessaire, selon le procédé, pendant la phase de compactage sur la presse (1).

23. Procédé selon la revendication 22, caractérisé en ce que le préchauffage des particules (37) s'effectue à 90-130°C environ.

24. Procédé selon l'une des revendications 1 à 23, caractérisé en ce que l'acide chlorhydrique est utilisé comme durcisseur (59) des microcapsules (38).

25. Dispositif pour la mise en oeuvre du procédé selon l'une des revendications 1 à 24, comprenant une station d'encollage des particules lignocellulosiques (37) par un liant dépourvu de durcisseur, une station distributrice (3, 42) pour répartir les particules (37) en une nappe (7), une presse pour transformer la nappe (7), par compactage et pression en un panneau lignocellulosique (9), un dispositif de transfert, intercalé entre la station distributrice (3, 42) qui se trouve à proximité immédiate de l'entrée de la presse (1), et la presse (1) et qui assure l'introduction de la nappe (7) dans la presse (1), dispositif caractérisé en ce qu'à proximité de la presse (1) est disposé un appareil (47) de production de microcapsules (38) contenant le durcisseur en phase gazeuse ou en phase binaire comprenant un vecteur gazeux, cet appareil (47) étant relié par un circuit court pour la production de microcapsules (38) à une station de mélange (39) séparée de la station distributrice (42) mais placée immédiatement en amont de celle-ci, ou encore incorporée à cette station (42), les microcapsules (38) étant mises en mélange avec les particules lignocellulosiques (37) à l'intérieur de la station de mélange (39) pour éviter une destruction prématurée des microcapsules (38).

26. Dispositif selon la revendication 25, caractérisé en ce que la station distributrice (42) fonctionne par soufflage.

27. Dispositif selon la revendication 25, caractérisé en ce que la station distributrice (3) fonctionne par projection.

28. Dispositif selon l'une des revendications 25 à 27, caractérisé en ce que la presse (1) est une presse à deux bandes fonctionnant en continu.

29. Dispositif selon l'une des revendications 25 à 27, caractérisé en ce que la presse (1) est une presse à un ou plusieurs étages fonctionnant en discontinu.

30. Dispositif selon l'une des revendications 25 à 29, caractérisé en ce que l'appareil de fabrication (47) des microcapsules (38) comprend un récipient collecteur (49) des microcapsules (38), au-dessus duquel est disposée une tête d'extrusion (48) comportant un insert (50) traversé par un canal (51), une chambre annulaire (52) étant située à la partie inférieure de la tête (48) entre la paroi de cette tête et l'insert (50), la chambre annulaire (52) et le canal (51) débouchant par un orifice commun (53) d'un embout (54), une canalisation d'amenée (55) du matériau liquide destiné à la constitution de l'enveloppe des microcapsules (58) traversant la tête d'extrusion (48) pour déboucher dans la chambre annulaire (52), une canalisation d'alimentation (56) amenant le durcisseur (59) dans le canal (51), de sorte que les microcapsules (38) se forment à l'orifice (53) de l'embout (54) sous l'aspect de gouttes (57).

31. Dispositif selon la revendication 30, caractérisé en ce que le récipient collecteur (49) contient un agent de durcissement des enveloppes (58) des microcapsules (38).

32. Dispositif selon la revendication 30 ou 31, caractérisé en ce qu'une soufflante (60), disposée sur le récipient collecteur (49), produit un courant d'air qui assure le transport pneumatique des microcapsules (38) contenues dans le récipient (49), à destination de la station de mélange (39) ou de la station distributrice (42), par des canalisations (41, 44).

Fig. 1

EP 0 320 712 B1

13

EP 0 320 712 B1

Fig. 2

14

Fig. 3

Fig. 4

Fig. 5